# DEMANDE DE BREVET EUROPEEN

(11) **EP 2 377 487 A1**
(43) Date de publication de la demande: **19.10.2011**
(21) Numéro de dépôt: 10159946.2
(22) Date de dépôt: 14.04.2010
(51) Int. Cl.: A61C 3/06, B24D 13/12, B24D 18/00

(54) **Nécessaire pour le polissage d'une prothèse dentaire**

(71) Demandeur: Ratel, Pascal, 05500 Saint Laurent du Cros (FR)
(72) Inventeur: Ratel, Pascal, 05500 Saint Laurent du Cros (FR)
(74) Mandataire: Roman, Alexis

(57) **Abrégé**

L'invention a pour principal objectif de fournir un nécessaire pour le polissage d'une prothèse dentaire capable de s'adapter au mieux au relief de ladite prothèse tout en limitant le nombre de changements de disque.

La solution proposée par l'invention est un nécessaire pour le polissage d'une prothèse dentaire (20) remarquable en ce qu'il comprend :
- un disque (1) abrasif en mousse destiné à polir la prothèse (20),
- un outil (10) pourvu de dents (11) configurées pour rainurer la périphérie (2) du disque (1), de manière à assouplir cette dernière.

## Description

### Domaine technique de l'invention.

L'invention a pour objet un nécessaire pour le polissage d'une prothèse dentaire.

Elle a également pour sujet l'utilisation du nécessaire objet de l'invention.

L'invention concerne le domaine technique des prothèses dentaires et plus spécifiquement celui des outils permettant la réalisation de prothèses dentaires.

### État de la technique.

On connait les disques abrasifs en mousse utilisés pour le polissage d'une prothèse dentaire. Ces disques sont généralement réalisés en élastomère du type polyuréthane, silicone, ou autres comme décrit dans les documents US 3,084,364 [Alma. A. HUTCHINS] ou US 2,940,228 [W. HELLING et H. NEUNZIG]. En particulier, ces disques peuvent être recouverts de particules abrasives comme le soulignent les documents EP 0 739 264 [LUPI QUINTILIO], US 3,252,775 [Berne TOCCI-GILBERT], US 3,082,582 [Bernard G. JESKE], ou WO 2007/038204 [3M INNOVATIVE PROPERTIES COMPANY]. Les particules peuvent également être mélangées à l'élastomère des disques comme le montrent les documents WO 2002/094506 [3M INNOVATIVE PROPERTIES COMPANY], EP 0 400 783 [MINNESOTA MINING AND MANUFATURING COMPANY], WO 93/04819 [MINNESOTA MINING AND MANUFATURING COMPANY], ou EP 0 083 250 [INOUE-JAPAX RESEARCH INCOPORATED].

Dans le domaine de la prothèse dentaire, un tour permet d'entrainer les disques en rotation qui, une fois en contact avec la prothèse dentaire, polissent et modèlent son relief. Au fur et à mesure des opérations de polissage, les disques s'usent et doivent être changés. Ils sont généralement vendus par paquet de plusieurs disques.

Cependant, les disques tels qu'ils existent actuellement ne permettent pas de s'adapter efficacement au relief des prothèses dentaires, notamment en ce qui concerne les zones exigües dudit relief. En outre, ce relief varie sensiblement pour chaque patient et il est donc impossible de fournir un disque universel ayant un profil s'adaptant à tous les reliefs de prothèse existants.

Pour remédier à ce problème, on connait le nécessaire pour le polissage de prothèses dentaires, décrit dans le document EP 0 623 319 [DENTSPLY INTERNATIONAL, INC.], comprenant plusieurs disques de profils différents, chaque disque étant destiné au polissage d'une zone spécifique de la prothèse.

Pour autant, l'utilisation de ce type de nécessaire s'avère inconfortable. En effet, celui-ci impose au prothésiste dentaire :
- soit de démonter et remonter successivement les différents disques sur le tour portatif ; ce qui ralentit considérablement l'opération de polissage de la prothèse,
- soit de faire l'acquisition d'autant de tours portatifs qu'il y a de disques de profils différents ; ce qui implique un investissement excessif de la part du prothésiste.

Pour pallier cet état de fait, l'invention a pour principal objectif de fournir un nécessaire pour le polissage d'une prothèse dentaire capable de s'adapter au mieux au relief de ladite prothèse tout en limitant le nombre de changements de disque.

L'invention a également pour objectif de fournir un nécessaire facile d'utilisation, de conception simple et peu onéreux.

### Divulgation de l'invention.

La solution proposée par l'invention est un nécessaire pour le polissage d'une prothèse dentaire remarquable en ce qu'il comprend :
- un disque abrasif en mousse destiné à polir la prothèse,
- un outil pourvu de dents configurées pour rainurer la périphérie du disque, de manière à assouplir cette dernière.

Ce nécessaire permet de modeler spécifiquement un disque pour polir de manière optimale la prothèse, quelque soit son relief.

Selon une caractéristique avantageuse de l'invention, l'outil se présente sous la forme d'un manche dont l'extrémité est pourvue d'une rangée de dents disposée entre deux taquets de positionnement. Les taquets permettent astucieusement de positionner le disque par rapport l'outil lors des opérations de rainurage.

Selon une autre caractéristique avantageuse de l'invention, les taquets de positionnement sont espacés d'une distance supérieure à l'épaisseur du disque, de manière à pouvoir déplacer axialement ledit disque entre les deux dits taquets ou à positionner alternativement ledit disque contre l'un puis l'autre taquet. Il est ainsi possible de réaliser des rainures de différentes largeurs ; en particulier, plus le déplacement axial du disque entre les taquets est important, plus la largeur des rainures est grande. Il est aussi possible en positionnant alternativement le disque contre l'un puis l'autre taquet de réaliser deux séries de rainures intercalées l'une dans l'autre.

Selon encore une autre caractéristique avantageuse de l'invention, le nécessaire objet de l'invention comprend un outil pourvu de crevées configurées pour limer les arêtes du disque de manière à conformer ledit disque au relief de la prothèse. Le limage des arêtes permet de modeler le profil du disque de manière à ce qu'il épouse au mieux les formes du relief de la prothèse.

Selon encore une autre caractéristique avantageuse de l'invention permettant d'obtenir un limage uniforme sur la largeur de l'outil, les crevées sont arrangées suivant plusieurs lignes, lesdites crevées étant agencées en quinconces d'une ligne à l'autre.

Selon encore une autre caractéristique avantageuse de l'invention permettant d'obtenir un profil de disque précis, les crevées sont arrangées suivant plusieurs lignes, lesdites crevées ayant des tailles différentes de manière à obtenir différentes finitions de limage.

Un autre aspect de l'invention concerne l'utilisation du nécessaire objet de ladite invention, pour le polissage d'une prothèse dentaire, dans laquelle :
- on conforme le disque au moyen de l'outil,
- on saupoudre des particules abrasives sur la prothèse,
- on polit les parois de la prothèse par friction du disque contre lesdites parois.

Ces étapes successives permettent, par modelage du disque et amplification de son caractère abrasif via l'ajout de particules à la surface de la prothèse, d'obtenir un polissage optimum et intégral de ladite prothèse quelque soit son relief.

Encore un autre aspect de l'invention concerne un procédé pour conformer le disque abrasif en mousse du nécessaire conforme à l'invention, dans lequel :
- on entraine en rotation le disque,
- on met en contact les dents de l'outil du nécessaire conforme à l'invention avec la périphérie du disque, de manière à former des rainures sur ladite périphérie.

Ces étapes permettent d'assouplir la périphérie du disque, de manière à ce que celle-ci puisse se déformer et épouser au mieux le relief de la prothèse.

Selon encore une autre caractéristique avantageuse de l'invention pour conformer le disque abrasif en mousse :
- on utilise un outil pourvu de crevées,
- on entraine en rotation le disque,
- on met en contact les crevées de l'outil avec les arêtes du disque de manière à conformer ledit disque au relief de la prothèse.

Ces étapes permettent de modeler le profil du disque, de manière à ce qu'il puisse pénétrer dans les zones les plus exiguës du relief de la prothèse.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1) représente schématiquement une vue en perspective d'un disque abrasif en mousse,
- la figure 2.a) représente schématiquement une vue de face du disque représenté sur la figure 1),

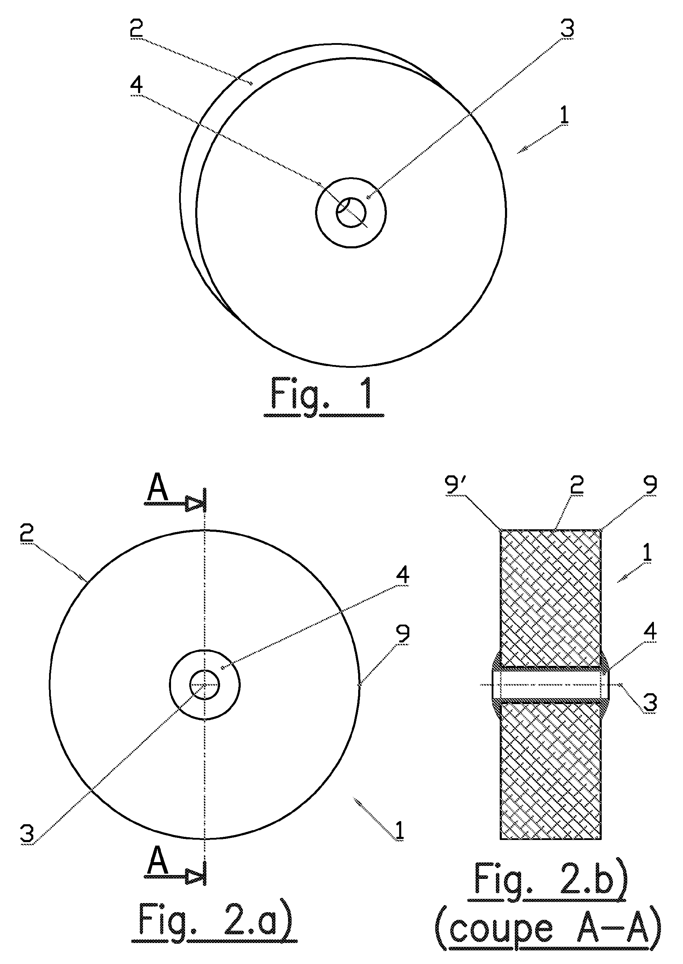

- la figure 2.b) représente schématiquement une vue en coupe A-A du disque représenté sur la figure 2.a),

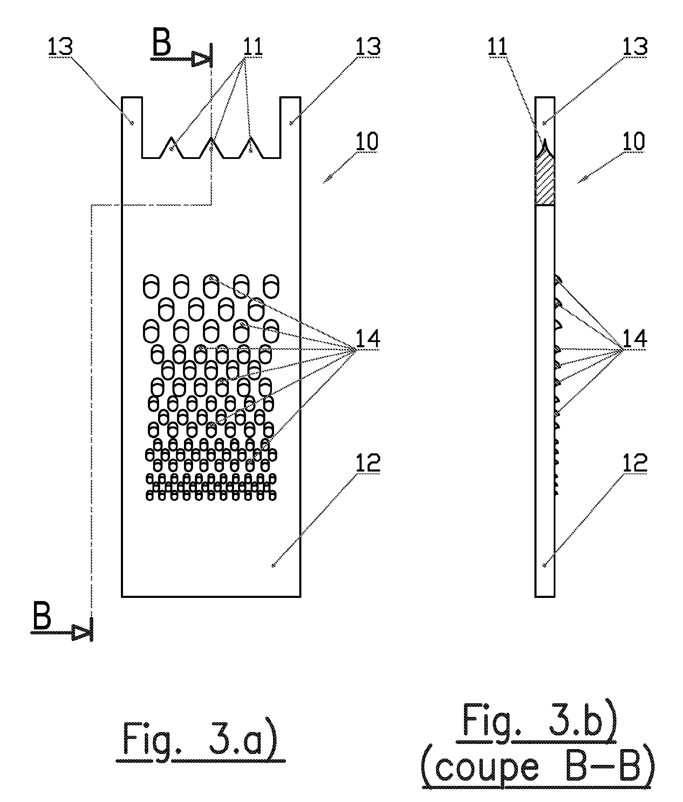

- la figure 3.a) représente schématiquement une vue de face d'un outil pourvu de dents et de crevées,
- la figure 3.b) représente schématiquement une vue en coupe B-B de l'outil représenté sur la figure 3.a),

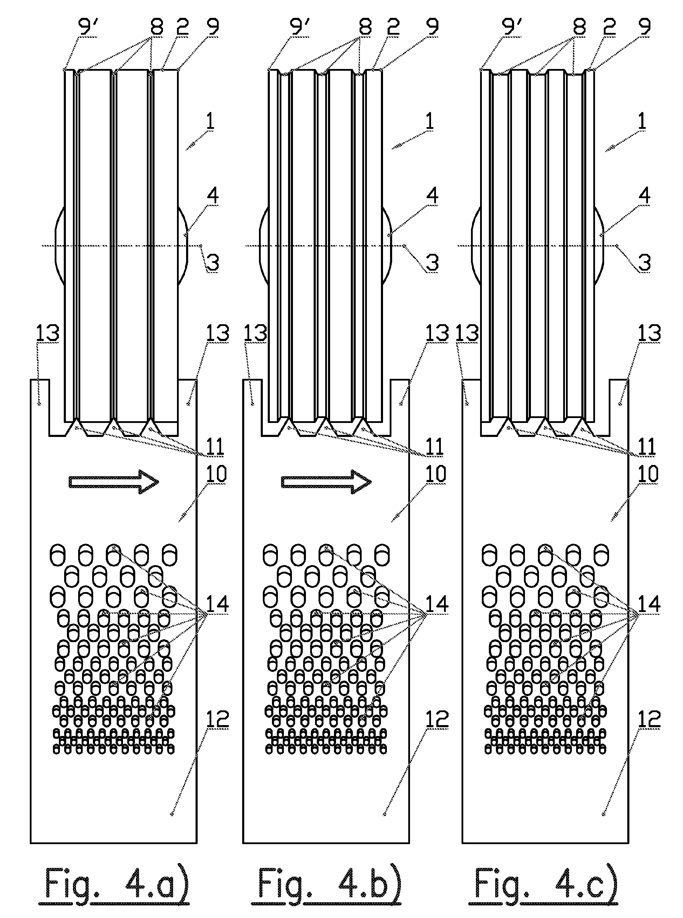

- Les figures 4.a) à 4.c) représentent schématiquement les étapes d'un premier mode de réalisation permettant la formation de rainures sur la périphérie du disque représenté sur la figure 1), au moyen de l'outil représenté sur la 2.a),

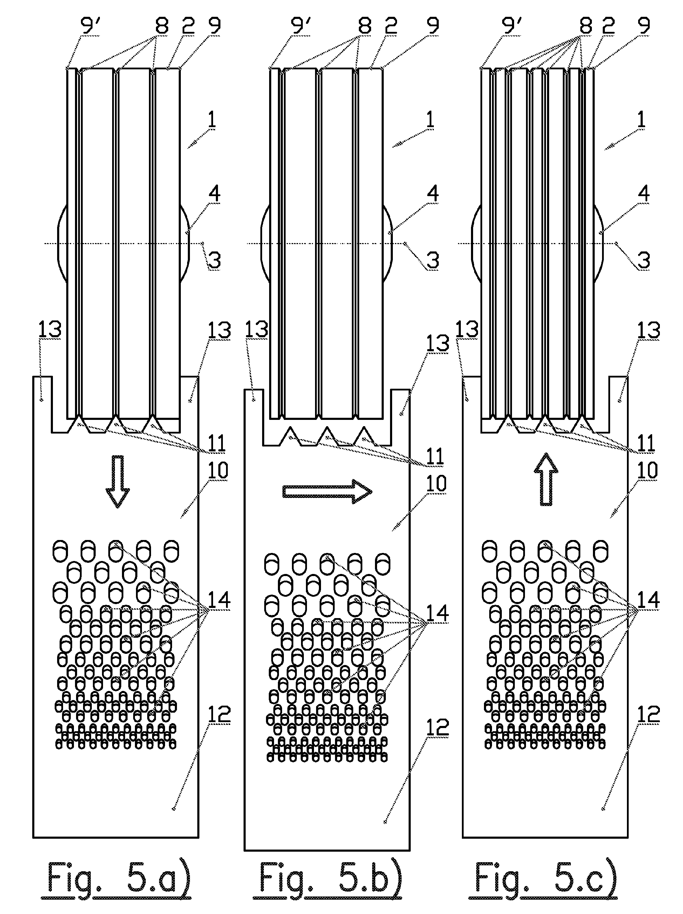

- Les figures 5.a) à 5.c) représentent schématiquement les étapes d'un second mode de réalisation permettant la formation de rainures sur la périphérie du disque représenté sur la figure 1), au moyen de l'outil représenté sur la 2.a),

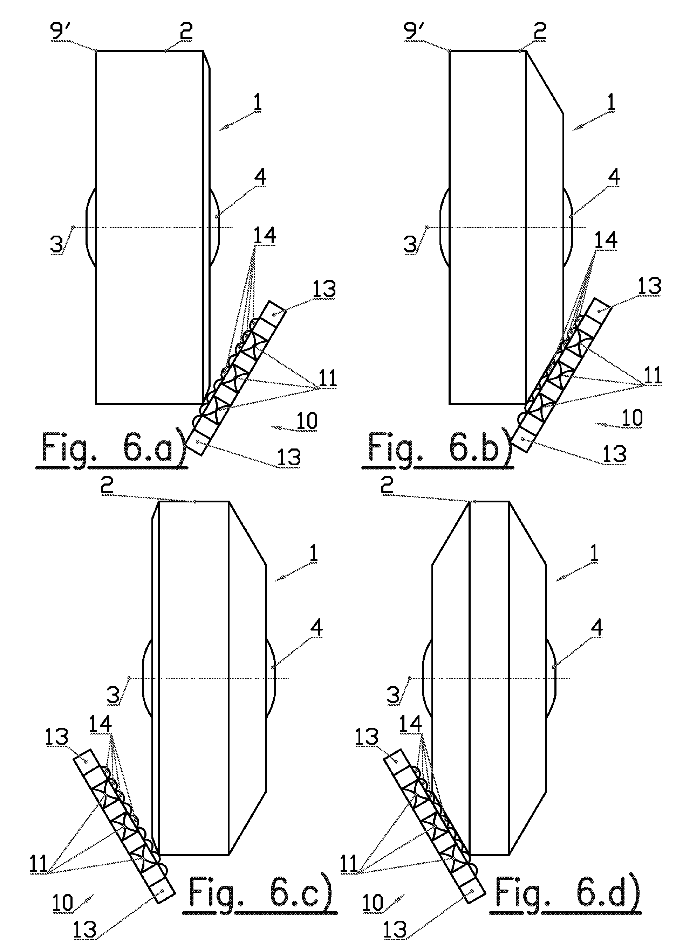

- Les figures 6.a) à 6.d) représentent schématiquement des étapes permettant le modelage du profil du disque représenté sur la figure 1), au moyen de l'outil représenté sur la 2.a),

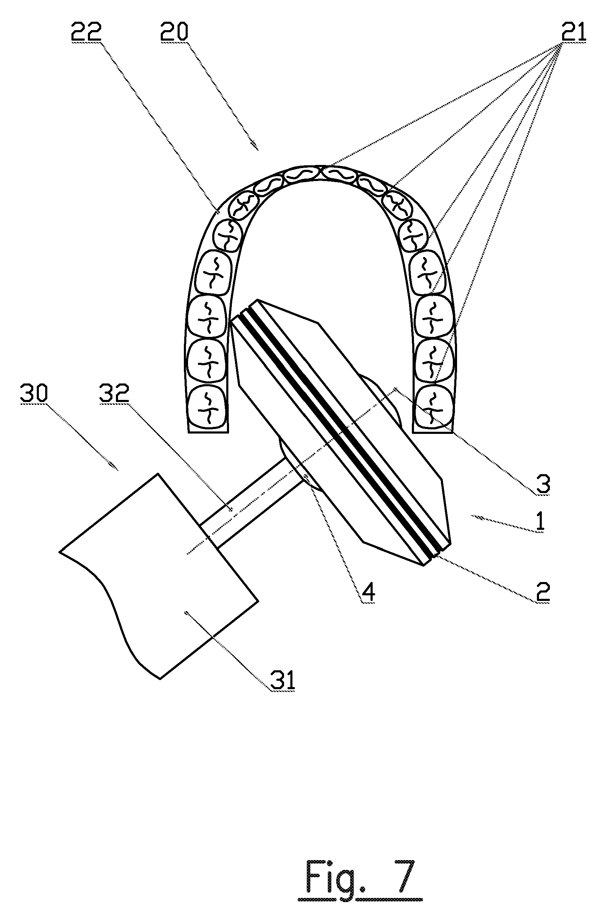

- La figure 7) représente schématiquement l'opération de polissage de la prothèse dentaire après modelage du profil du disque.

### Modes de réalisation de l'invention.

Le nécessaire objet de l'invention permet le polissage d'une prothèse dentaire (20). Cette dernière se présente généralement sous la forme de dents artificielles réalisées en résine ou en céramique, et agencées sur une arcade en métal ou en résine. Le relief (22) de la prothèse (20) doit être minutieusement modelé de manière à s'adapter parfaitement à la bouche du patient.

Le prothésiste doit polir, par friction, ladite prothèse au moyen d'un disque (1) abrasif en mousse comme celui représenté sur les figures 1) à 2.b). Le disque (1) a un diamètre compris entre 4 et 8 cm et une épaisseur comprise entre 1 et 3 cm. Il est préférentiellement réalisé en polyuréthane, mais peut également être réalisé en silicone, en caoutchouc, ou tout autre élastomère convenant à l'homme du métier. Il peut présenter, dans sa structure et/ou sur sa périphérie (2), des particules abrasives du type de grains de roche (ponce, blanc d'Espagne, ou autres), de métal, de céramique, fibre de verre, etc. Pour obtenir une friction rapide et efficace, le disque (1) est entrainé en rotation au moyen d'un tour (30) fixe ou mobile. Ce dernier se présente généralement sous la forme d'un moteur électrique entrainant un arbre (32) en rotation. Ce dernier a une forme cylindrique ou conique, fileté ou pas, et de section circulaire, rectangulaire, triangulaire ou autre. Pour permettre son montage sur l'arbre (32), le disque (1) présente, au niveau de son axe (3), un moyeu (4) destiné à s'emmancher sur ledit arbre. Le moyeu (4) se matérialise par un tube rigide de forme cylindrique ou conique, fileté ou pas, et de section identique à celle de l'arbre (32). Dans le cas d'un emmanchement cylindrique, le moyeu (4) peut être lié en rotation à l'arbre (32) au moyen d'une clavette, d'une goupille, ou autres. Il est généralement arrêté axialement sur l'arbre (32) au moyen d'épaulement, d'anneau élastique, de vis, etc. Le moyeu (4) et l'arbre (32) peuvent être réalisés en matière plastique, en métal, etc.

Néanmoins, étant donnée la complexité du relief (22) de la prothèse (20), il est impossible de la polir en totalité au moyen du disque (1) précédemment décrit. En se rapportant aux figures 3.a) et 3.b), et dans l'objectif de remédier à ce problème, le nécessaire objet de l'invention comprend un outil (10) pourvu de dents (11) configurées pour rainurer la périphérie (2) du disque (1), de manière à assouplir cette dernière. La périphérie (2) ainsi assouplie peut alors se déformer de manière à épouser au mieux le relief (22) de la prothèse (20). L'outil (10) se présente sous la forme d'un manche (12) dont l'extrémité est pourvue d'une rangée de dents (11) disposée entre deux taquets (13) de positionnement.

Le manche (12), destiné à être en contact avec la main du prothésiste, permet le maniement de l'outil (10). Il se présente sous la forme d'une pièce parallélépipédique, cylindrique, oblongue, ou autres. Il peut être réalisé en métal, en matière plastique, en bois, etc.

Les dents (11), disposées à l'extrémité du manche (12), peuvent être plates ou incurvées vers l'avant. Elles sont généralement disposées dans le prolongement du manche (12), mais peuvent aussi être inclinées par rapport à celui-ci. Elles peuvent avoir une forme triangulaire du type dents de scie, avoir une forme de griffes, ou encore avoir une forme similaire à un outil à tronçonner ou à un outil à rainurer du commerce, ou toute autre forme convenant à l'homme du métier. Elles peuvent être usinées ou moulées directement sur le manche (12) ou être rapportées et fixées par collage, soudage, vissage, etc. Elles peuvent être réalisées en métal, en matière plastique, etc. Préférentiellement, les dents (11) sont écartées les unes des autres d'environs 4 mm.

Disposés de part et d'autre de la rangée de dents (11), les taquets (13) se présentent sous la forme de parallélépipèdes, de cylindres, ou autres. Ils sont espacés d'une distance au moins égale à la largeur du disque (1) de manière à permettre le passage de ce dernier. Préférentiellement, et comme représentés sur les figures 4.a) à 5.c), les taquets (13) sont espacés d'une distance supérieure à l'épaisseur du disque (1), de manière à pouvoir déplacer axialement ledit disque entre les deux dits taquets ou à positionner alternativement ledit disque contre l'un puis l'autre taquet. Ils peuvent être usinés ou moulés directement sur le manche (12) ou êtres rapportés et fixés par collage, soudage, vissage, etc. Préférentiellement, un premier taquet (13) est disposé à une distance d'environ 1 mm de la rangée de dents (11), l'autre taquet (13) étant disposé à une distance d'environ 5 mm de ladite rangé.

En pratique, pour conformer le disque (1) au moyen de l'outil (10), le prothésiste commence par entrainer ledit disque en rotation avec le tour (30). Une fois le disque (1) en rotation, et comme représenté sur la figure 4.a), le prothésiste met en contact les dents (11) de l'outil (10) avec la périphérie (2) dudit disque. Chaque dent (11) ainsi en contact, enlève progressivement de la matière sur une ligne de la périphérie (2) du disque (1) de manière à former une rainure (8).

Selon un premier mode de réalisation représenté sur les figures 4.a) à 4.c), le prothésiste peut augmenter la largeur des rainures (8) en déplaçant le disque (1) axialement entre les taquets (13) comme représenté sur les figures 4.a) à 4.c). Plus le prothésiste déplace le disque, plus la largeur des rainures (8) augmente.

Dans une variante de réalisation représentée sur la figure 5.a), le prothésiste peut, tout d'abord, mettre en contact l'outil (10) contre le disque (1), ce dernier étant positionné contre l'un des taquets (13), de manière à réaliser une première série de rainures (8). Puis, et comme représenté sur les figures 5.b) puis 5.c), le prothésiste retire l'outil (10) du disque (1) de manière à positionné ce dernier contre l'autre taquet (13), et à réaliser une deuxième série de rainures (8) intercalée avec la première série.

Malgré la souplesse obtenue sur la périphérie (2) du disque (1), il se peut que certaines zones exigües (21) du relief (22) ne soient pas accessibles par le disque (1) ainsi rainuré. En se rapportant aux figures 3.a) et 3.b), et dans le but de pallier cet état de fait, le nécessaire objet de l'invention comprend un outil pourvu de crevées (14) configurées pour limer les arrêtes (9, 9') du disque (1) de manière à le conformer au mieux au relief (22) de la prothèse (20). Par commodité et pour une meilleure efficacité, cet outil peut être combiné à l'outil (10) pourvu de dents.

Les crevées (14) se présentent sous la forme de calottes tranchantes de forme générale sphérique, cylindrique, conique ou autres. Comme représentées sur les figures 3.a) et 3.b), les crevées (14) sont généralement disposées sur une partie plane de l'outil (10). Elles sont arrangées suivant plusieurs lignes s'étendant dans la largeur de cette partie plane. Préférentiellement, de sorte que l'enlèvement de matière soit globalement homogène sur toute la largeur de l'outil (10), les crevées (14) sont agencées en quinconces d'une ligne à l'autre, à la façon d'une râpe à muscade. Elles peuvent également avoir des tailles différentes de manière à obtenir différentes finitions de limage. Dans une telle configuration, toutes les crevées (14) d'une ligne auront la même taille et cette taille diminuera, selon les cas, ligne après ligne, toutes les deux lignes, toutes trois lignes, etc. Elles peuvent être réalisées directement sur le manche (12), ou sur une pièce rapportée ayant la forme d'une plaque en matière plastique, en acier, ou autres. La pièce rapportée peut être fixée sur le manche par vissage, collage, etc. Les crevées (14) peuvent être obtenues par moulage, emboutissage, ou autres.

En principe, pour conformer le disque (1) au moyen de l'outil (10) pourvu de crevées (14), le prothésiste commence par entrainer ledit disque en rotation avec le tour (30). Une fois le disque en rotation, et comme schématisé sur la figure 6.a), le prothésiste met en contact les crevées (14) de l'outil (10) avec une arête (9) du disque (1). Les crevées (14), ainsi en contact, enlèvent de la matière sur l'arête (9) du disque (1) de manière à donner progressivement au profil dudit disque une forme qui peut être conique comme représentée sur la figure 6.b), sphérique, ou toute autre forme convenant à l'homme du métier et permettant de conformer le disque au relief de la prothèse. Suivant le profil du disque (1) qu'il désire obtenir, et comme schématisé sur les figures 6.c) et 6.d), le prothésiste peut également mettre en contact les crevées (14) de l'outil (10) avec la deuxième arête (9') du disque.

Une fois le disque (1) conformé au moyen de l'outil (10), le prothésiste peut saupoudrer des particules abrasives sur la prothèse (20) de manière à augmenter l'abrasivité du disque lorsqu'il est en contact ladite prothèse. En effet, ces particules abrasives participent activement au polissage de la prothèse (20). Les particules abrasives se présentent sous la forme d'une poudre contenant des particules du type grains de roche (ponce, blanc d'Espagne, ou autres), de métal, de céramique, fibre de verre, etc.

Après saupoudrage et comme représenté sur la figure 7), le prothésiste peut polir les parois de la prothèse (20) par friction du disque (1) contre lesdites parois. Le frottement du disque (1) et des particules abrasives sur la prothèse (20) provoque un enlèvement de microparticules de prothèse permettant de modeler précisément le relief (22) de ladite prothèse. En pratique, lorsque le relief (22) de la prothèse (20) est sensiblement lisse, le disque (1) est entrainé en rotation à une vitesse d'environ 3000 tours par minutes. Par contre, lorsque le relief (22) de la prothèse (20) est accidenté, c'est-à-dire que ledit relief comporte des zones exigües (21), par exemple au niveau de l'interstice des dents de ladite prothèse, la vitesse de rotation du disque (1) est préférablement diminuée à environ 1500 tours par minutes.

## Revendications

1. Nécessaire pour le polissage d'une prothèse dentaire (20) **caractérisé en ce qu**'il comprend :
- un disque (1) abrasif en mousse destiné à polir la prothèse (20),
- un outil (10) pourvu de dents (11) configurées pour rainurer la périphérie (2) du disque (1), de manière à assouplir cette dernière.

2. Nécessaire selon la revendication 1, **caractérisé en ce que** l'outil (10) se présente sous la forme d'un manche (12) dont l'extrémité est pourvue d'une rangée de dents (11) disposée entre deux taquets (13) de positionnement.

3. Nécessaire selon la revendication 2, **caractérisé en ce que** les taquets (13) de positionnement sont espacés d'une distance supérieure à l'épaisseur du disque (1), de manière à pouvoir déplacer axialement ledit disque entre les deux dits taquets ou à positionner alternativement ledit disque contre l'un puis l'autre taquet.

4. Nécessaire selon l'une des revendications précédentes, **caractérisé en ce qu'**il comprend un outil (10) pourvu de crevées (14) configurées pour limer les arêtes (9, 9') du disque (1) de manière à conformer ledit disque au relief (22) de la prothèse (20).

5. Nécessaire selon la revendication 4, **caractérisé en ce que** les crevées (14) sont arrangées suivant plusieurs lignes, lesdites crevées étant agencées en quinconces d'une ligne à l'autre.

6. Nécessaire selon l'une des revendications 4 ou 5, **caractérisé en ce que** les crevées (14) sont arrangées suivant plusieurs lignes, lesdites crevées ayant des tailles différentes de manière à obtenir différentes finitions de limage.

7. Utilisation du nécessaire selon l'une des revendications précédentes pour le polissage d'une prothèse dentaire (20), **dans laquelle:**
- on conforme le disque (1) au moyen de l'outil (10),
- on saupoudre des particules abrasives sur la prothèse (20),
- on polit les parois internes de la prothèse (20) par friction du disque (1) contre lesdites parois.

8. Procédé pour conformer le disque (1) abrasif en mousse du nécessaire selon l'une des revendications 1 à 6, **dans lequel:**
- on entraine en rotation le disque (1),
- on met en contact les dents (11) de l'outil (10) du nécessaire selon l'une des revendications précédentes avec la périphérie (2) du disque (1), de manière à former des rainures (8) sur ladite périphérie.

9. Procédé selon la revendication 8, **dans lequel:**
- on utilise un outil (10) pourvu de crevées (14),
- on entraine en rotation le disque (1),
- on met en contact les crevées (14) de l'outil (10) avec les arêtes (9, 9') du disque (1) de manière à conformer ledit disque au relief (22) de la prothèse (20).
